# EUROPÄISCHE PATENTANMELDUNG

(11) **EP 0 918 415 A2**
(43) Veröffentlichungstag der Anmeldung: **26.05.1999**
(21) Anmeldenummer: 98113186.5
(22) Anmeldetag: 15.07.1998
(51) Int. Cl.: H04L 12/28, H04M 11/06

(54) **System zum Übertragen von digitalen Daten, insbesondere Sprache, über eine Funkstrecke**

(30) Priorität: 02.10.1997 DE 19743711
(71) Anmelder: Rohde & Schwarz GmbH & Co. KG, D-81671 München (DE)
(72) Erfinder: Greiner, Günter, Dr., 81669 München (DE)
(74) Vertreter: Graf, Walter, Dipl.-Ing.

(57) **Zusammenfassung**

Bei einem System zum Übertragen von digitalen Daten, insbesondere von Sprache, in protokollgesteuert aufeinanderfolgenden Datenblöcken mit in unregelmäßigen Abständen dazwischen auftretenden Lücken über eine Funkstrecke, werden in den Datenblock-Lücken digitale Daten aus mindestens einer anderen Datenquelle durch das gleiche Protokoll gesteuert übertragen.

## Beschreibung

Die Erfindung betrifft ein System zum Übertragen von digitalen Daten wie Sprache über eine Funkstrecke laut Oberbegriff des Patentanspruches.

Zur Übertragung von digitalisierter Sprache über Funkstrecken, insbesondere Kurzwellenstrecken, werden spezielle Protokolle mit unterschiedlichen Eigenschaften eingesetzt. Für eine Übertragung ohne Rückmeldung werden beispielsweise Protokolle mit sogenannter Forward Error Correction (FEC) benutzt, bei einem Funkverkehr mit Rückmeldemöglichkeit Finden üblicherweise Übertragungsprotokolle mit Besätitigung (ARQ, Automatic Repeat Request) Anwendung. Die hierfür verwendeten Übertragungsprotokolle sind entweder verbindungsorientiert, d.h. sie bauen eine Verbindung für die Übertragung einer definierten Menge von informationseinheiten auf, übertragen diese und bauen dann die Verbindung wieder ab, oder das Übertragungsprotokoll ist verbindungslos, d.h. es wird beim vorliegen eines zu übertragenden Nachrichtenpakets wird dieses über den Funkkanal übertragen. In beiden Fällen wird dazu die Übertragung nur so lange aufrechterhalten, bis die Datenmenge bei der Empfangsstation angelangt ist.

Bei Übertragungssystemen dieser Art für Sprache ist die Aufrechterhaltung einer permanenten Verbindung wünschenswert, damit verzögerungslos Nachrichten übertragen werden können. Wenn hierbei jedoch nicht genügend Daten für einen permanenten Übertragungsvorgang vorliegen werden bei solchen permanent aufrechtzuerhaltenden Funkstrecken gesteuert durch das jeweilige Protokoll in den Lücken, in denen bei der Sprachübertragung beispielsweise in Sprechpausen keine Datenblöcke übertragen werden, sogenannte Füllzeichen übertragen, um so auch bei Sprechpausen eine permanente Verbindung aufrechtzuerhalten.

Diese bekannte Verfahrensweise für eine lückenlose digitale Sprachübertragung ist energieverschwendend, da der Sender der Funkstrecke ja auch für die Übertragung der nutzlosen Füllzeichen mit voller Leistung arbeitet. Es ist zwar bekannt, bei verbindungslosen Protokollen den Sender im sogenannten Idle-Betrieb zu betreiben, den Sender also in den Sprachlücken in der Leistung herunter- bzw. abzuschalten, hierbei ist jedoch die Aufrechterhaltung einer Kurzwellenverbindung nicht mit Sicherheit gewährleistet.

Es ist daher Aufgabe der Erfindung, ein Übertragungssystem aufzuzeigen, mit dem zur Übertragung von digitaler Sprache eine permanente Verbindung aufrechterhalten wird, ohne daß in Sprechpausen unnütz Senderenergie verschwendet wird.

Diese Aufgabe wird ausgehend von einem System laut Oberbegriff des Patentanspruches durch dessen kennzeichnende Merkmale gelöst.

Beim erfindungsgmäßen System werden anstelle von nutzlosen Füllzeichen digitale Daten aus einer anderen Datenquelle in den Lücken zwischen den Sprachpaketen übertragen, beispielsweise Daten eines Faxgeräts, eines Rechners, Videodaten oder dergleichen. Weg solche zusätzlichen digitalen Daten aus mehreren verschiedenen Datenquellen übertragen werden sollen ist es vorteilhaft, hier noch eine zusätzliche Prioritätserkennung vorzusehen. Der Benutzer legt dabei fest, welche dieser zusätzlichen Daten höchste Priorität besitzen, die dann als erstes über die Lücken übertragen werden, während die anderen als nicht so wichtig eingestuften Daten erst dann übertragen werden, wenn die Daten höchster Priorität fertig übertragen sind.

Das System ist vor allem für die Übertragung von digitalisierter Sprache geeignet, da hier mehr oder weniger lange und in unregelmäßigen Abständen auftretende Sprechpausen zu entsprechend langen Datenlücken führen, im Prinzip eignet sich das System aber auch zum Auffüllen von Lücken, die bei der Übertragung von beliebigen anderen digitalen Daten auftreten.

Die Erkennung der Lücken zwischen den Übertragungsblöcken erfolgt über die zugehörige Protokollsteuerung, über die auch eine entsprechende Kennzeichnung der in den Lücken übertragenen Daten erfolgt, damit empfangsseitig in der Empfangseinrichtung erkennbar ist, welche der ankommenden Daten zu Sprachdatenblöcken gehören und welche zu den in den Lücken zusätzlich übertragenen Daten gehören.

Zur Erkennung der Lücken können verschiedene Methoden benutzt werden.

Zur digitalen Sprachübertragung werden sogenannten Vocoder benutzt, die das analoge Sprachsignal in einen Strom digitaler Daten umwandeln. Diese Umwandlung erfolgt mit einer durch die Bearbeitungszeit bedingten, vocoderabhängigen Verzögerungszeit. In den Sprechpausen werden von den Vocodern üblicherweise Füllzeichen ausgegeben. Sind die Füllzeichen signifikant, d.h. sind sie eindeutig den Pausen zuzuordnen, so können sie als Indikatoren für Sprechpausen benutzt werden. Das Protokoll prüft in diesem Fall permanent die vom Vocoder zur Sendeeinrichtung einlaufenden Daten, sind es Fülldaten, werden diese verworfen und an deren Stelle die anderen anstehenden Daten in den Übertragungspuffer geschrieben. Dieses Verfahren kann auch benutzt werden, wenn in den Sprechpausen keine Füllzeichen ausgegeben werden; das Fehlen von Zeichen wird dann gleich behandelt wir das Auftreten von signifikanten Füllzeichen.

Sind die Füllzeichen nicht signifikant, müssen Sprechpausen durch eine Hardwareschaltung erkannt werden, die am Pegel des analogen Signals Pausen des Sprechers identifizieren. Derartige Schaltungen sind derzeit unter dem Begriff Vox bekannt. Das Ausgangssignal einer derartigen Vox-Schaltung kann benutzt werden, dem die Daten verarbeitenden Prozessor z.B. durch eine Interrupt-Steuerung das Auftreten von Sprechpausen zu signalisieren. Die o.g. vocoderspezifischen Verzögerungszeiten müssen entsprechend berücksichtigt werden. In diese Lücken im Datenstrom fügt das Protokoll wie oben beschrieben als andere Daten gekennzeichnete Datenblöcke so lange ein, bis wieder Sprachdaten aus dem Vocoder eintreffen.

## Patentansprüche

1. System zum Übertragen von digitalen Daten, insbesondere von Sprache, in protokollgesteuert aufeinanderfolgenden Datenblöcken mit in unregelmäßigen Abständen dazwischen auftretenden Lücken über eine Funkstrecke,
**dadurch gekennzeichnet,**
daß in den Datenblock-Lücken digitale Daten aus mindestens einer anderen Datenquelle durch das gleiche Protokoll gesteuert übertragen werden.
